# EUROPEAN PATENT APPLICATION

(11) **EP 3 760 675 A1**
(43) Date of publication of application: **06.01.2021**
(21) Application number: 19184657.5
(22) Date of filing: 05.07.2019
(51) Int. Cl.: C08L 33/08

(54) **POLYMERIZABLE COMPOSITIONS AND COPOLYMERS OF CYCLIC (METH)ACRYLATE ESTERS WITH ALKYL (METHACRYLATES) AND/OR FREE RADICALLY POLYMERIZABLE MONOMERS**

(71) Applicant: Trinseo Europe GmbH, 8810 Horgen (CH)
(72) Inventor: Balan, Abidin, 4814VL Breda (NL); Bouquet, Gilbert, 9000 Gent (BE); Van Nuffel, Claude, 9041 Oostakker (BE); Yao-Chu, Chung, Chinese Taipei, 30352 (CN); Lakeman, Pascal E.R.E.J., 4816A Breda (NL)
(74) Representative: Hoffmann Eitle

(57) **Abstract**

Disclosed are compositions comprising a) one or more cyclic (meth)acrylate esters; b) one or more alkyl (meth)acrylates; and c) one or more of i to iv;i) the one or more alkyl (meth)acrylates have two or more carbons in the alkyl group; ii) the one or more alkyl (meth)acrylates contain one or more alkyl methacrylates and one or more C₂₋₈ alkyl acrylates; iii) one or more unsaturated compounds containing nucleophilic groups or electrophilic groups; iv) one or more impact modifiers, colorants, mold release agents, flow modifiers, UV absorbers, light stabilizers, fillers, fibers, anti-oxidants, and heat stabilizers. Disclosed are copolymers prepared therefrom having a weight average molecular weight of about 50,000 g/mole or greater and a glass transition temperature of about 100 °C or greater. Disclosed are methods for preparing such copolymers. Disclosed are articles prepared from the compositions.

## Description

### TECHNICAL FIELD

This disclosure relates to polymerizable compositions and copolymers containing cyclic (meth)acrylate esters with alkyl (meth)acrylates and/or free radically polymerizable monomers and processes for preparing such polymers. Also claimed are articles prepared from such compositions.

### BACKGROUND

Polymers exhibiting high glass transition temperatures, opacity or transparency are used in a number of applications of polymeric systems, including packaging (food packaging), medical, electronic, optical, appliance and automotive applications. Polymers containing Bisphenol-A and Co-polymers of vinylidene substituted aromatic monomers and acrylonitrile were developed to provide polymers with increased glass transition temperatures and use temperatures which can be transparent or opaque. Such polymers may not exhibit great impact properties and modified polymers have been developed to improve the impact resistance. Such modified polymers may contain impact modifiers, such as butadiene based rubbers, for example copolymers of styrene and acrylonitrile modified with polybutadiene rubber, acrylonitrile-butadiene-styrene (ABS), and high impact polystyrene (HIPS).

There are concerns that polymers containing styrene, acrylonitrile or Bisphenol A contain free monomers which can leach out of articles prepared from the polymers and that the free monomers may be harmful. There is a desire in the polymer business to increase the content of monomers derived from biobased raw materials. The concern is that users are not willing to compromise with respect to the properties of the polymers with replacement of non-biobased monomers with biobased monomers. Examples of attempts to replace non-biobased monomers in vinylidene substituted aromatic monomer containing polymers are disclosed in WO 2016-188839, and Zhang et al. "Preparation of Poly(styrene-co-isobornyl methacrylate) Beads Having Controlled Glass Transition Temperature by Suspension Polymerization" Journal Applied Polymer Science 2013, pp 113-120 DOI: 10.1002/APP.38710, published online on 3 November 2012. If there are certain unreacted monomers in such copolymers, the unreacted monomers can plasticize the polymers and degrade the properties of the polymers and articles prepared therefrom, for instance the glass transition temperatures, impact properties, and stiffness properties etc.

There is a demand and need for polymers containing no or reduced amount of certain monomers, for instance vinylidene substituted aromatic monomers, acrylonitrile or Bisphenol A, or which contain increased content of biobased monomers while maintaining the excellent properties of such polymers, including transparency, high glass transition temperatures, impact properties, stiffness properties and the like. There is a need to reduce the level of unreacted monomers in such polymers or articles prepared from such polymers.

### SUMMARY

Disclosed are polymerizable compositions comprising a) from about 20 to about 99 percent by weight of one or more cyclic (meth)acrylate esters; b) from about 1 to 80 percent by weight of one or more alkyl (meth)acrylates; and c) one or more of features i to iv; i) the one or more alkyl (meth)acrylates have two or more carbons in the alkyl group;
ii) the one or more alkyl (meth)acrylates contain one or more alkyl methacrylates and one or more C₂₋₈ alkyl acrylates; iii) one or more unsaturated compounds containing nucleophilic groups or electrophilic groups; iv) one or more ingredients selected from impact modifiers, colorants, mold release agents, flow modifiers, UV absorbers, light stabilizers, fillers, fibers, anti-oxidants, and heat stabilizers; wherein the composition forms copolymers and the percent by weight is based on the weight of the composition. The composition may contain d) from about 1 to about 70 percent by weight of one or more compounds polymerizable by free radical polymerization. The one or more alkyl (meth)-acrylates may be one or more alkyl methacrylates and one or more C 2-8 alkyl acrylates. The composition may contain one or more unsaturated compounds containing nucleophilic groups or electrophilic groups. The nucleophilic groups may be one or more carboxylic acid, alcohol, phenol, amine, aniline, imidazole, tetrazole, thiol, boronic acid, glycol, hydrazine and hydroxyl amine groups. The electrophilic groups may be one or more of epoxide, anhydride, imide, ester, acyl halide, acyl nitrile, aldehyde, ketone, isocyanate and isothiocyanate groups. The composition may contain one or more ingredients selected from impact modifiers, colorants, mold release agents, flow modifiers, UV absorbers, light stabilizers, fillers, fibers, anti-oxidants and heat stabilizers.

The cyclic (meth)acrylate esters may comprise one or more cyclic or polycyclic groups. The cyclic or polycyclic groups of the cyclic (meth)acrylate esters may be aliphatic. The cyclic (meth)acrylate esters may comprise one or more of cyclohexyl (meth)acrylate, adamantyl (meth)acrylate, norbornyl methacrylate and isobornyl (meth)acrylate.

Also disclosed are compositions comprising a) from about 25 to about 99 percent by weight of one or more cyclic (meth)acrylate esters; b) from about 1 to about 65 percent by weight of one or more alkyl (meth)acrylates; and, c) from 0 to about 50 percent by weight of one or more compounds polymerizable by free radical polymerization; and, d) from about 0 to about 10 percent by weight of one or more unsaturated compounds containing nucleophilic groups or electrophilic groups; wherein the weight percent is based on the weight of the composition.

Disclosed are polymerizable compositions comprising: a) from about 35 to about 99 percent by weight of one or more cyclic (meth)acrylate esters; b) from about 0 to 65 percent by weight of one or more alkyl (meth)acrylates having two or more carbons in the alkyl group; and, c) from about 0 to about 65 percent by weight of one or more compounds polymerizable by free radical polymerization; wherein b and c are present in an amount of about 1 to about 65 percent by weight, the weight percentage is based on the weight of the monomers. Disclosed are compositions comprising at least one copolymer comprising: a) from about 35 to about 99 percent by weight of one or more cyclic (meth)acrylate esters; b) from about 0 to 65 percent by weight of one or more alkyl (meth)acrylates having two or more carbons in the alkyl group; and, c) from about 0 to about 65 percent by weight of one or more compounds polymerizable by free radical polymerization; wherein b and c are present in an amount of about 1 to about 65 percent by weight, the weight percentage is based on the weight of the copolymer. The composition may further comprise one or more impact modifiers, which may be materials commonly referred to as rubbers.

Disclosed are polymerizable compositions comprising: a) from about 35 to about 99 percent by weight of one or more cyclic (meth)acrylate esters; b) from about 0 to 65 percent by weight of one or more alkyl (meth)acrylates; and, c) from about 0 to about 65 percent by weight of one or more compounds polymerizable by free radical polymerization; and d) one or more impact modifiers; wherein b and c are present in an amount of about 1 to about 65 percent by weight, the weight percentage is based on the weight of the monomers. Disclosed are compositions comprising at least one copolymer comprising: a) from about 35 to about 99 percent by weight of one or more cyclic (meth)acrylate esters; b) from about 0 to 65 percent by weight of one or more alkyl (meth)acrylates having two or more carbons in the alkyl group; and, c) from about 0 to about 65 percent by weight of one or more compounds polymerizable by free radical polymerization; wherein b and c are present in an amount of about 1 to about 65 percent by weight, the weight percentage is based on the weight of the copolymer and one or more impact modifiers.

Disclosed are copolymers prepared from the disclosed compositions. The copolymers contain the residues of the recited compounds, monomers. The copolymers may contain the residues of the recited monomers in the same amounts as disclosed with respect to the polymerizable compositions. The copolymers may have a weight average molecular weight of about 50,000 g/mole or greater and a glass transition temperature of about 100 °C or greater. The copolymers may have a weight average molecular weight of about 100,000 g/mole or greater or about 120,000 g/mole or greater. The copolymers may contain about 5 percent by weight or greater of bio-based content. The copolymer may exhibit a transparency of about 85 percent or greater. The at least one copolymer may be linear or branched or a combination thereof.

The copolymers may comprise a) from about 50 to about 99 percent by weight of the copolymer of one or more cyclic (meth)acrylate esters; b) from about 1 to about 50 percent by weight of the copolymer of one or more alkyl (meth)acrylates; and, c) from 0 to about 50 percent by weight the copolymer of one or more compounds polymerizable by free radical polymerization.

These compositions may contain one or more impact modifier. The compositions disclosed may comprise from about 50 to about 99.5 percent by weight of the monomers recited or the copolymer formed and from about 0.5 to about 50 percent by weight of the impact modifier based on the weight of the composition. The composition may comprise a continuous matrix of the copolymer, and a dispersed phase comprising rubber. The dispersed phase may comprise particles of about 0.05 to about 10.0 microns. The impact modifier may also be grafted to the copolymers described herein. The copolymers may be grafted to the impact modifier. The impact modifier that is grafted to the copolymer or that the copolymer is grafted to may be polybutadiene. The impact modifier may be a polybutadiene rubber or an acrylic based rubber. The impact modifier may have a core shell morphology. The impact modifier may be a core shell rubber comprising a silicone based core shell rubber, an acrylic based core shell rubber or an ethylene-ethyl acrylate based core shell rubber.

The disclosed copolymers may be blended with another thermoplastic polymer or copolymer. The thermoplastic polymer is one or more of poly(meth)acrylates, polycarbonates, polyesters, polymers containing vinylidene substituted aromatic monomers, and the like. The composition may comprise from about 50 to about 99.5 percent by weight of one or more of copolymers and from about 0.5 to about 50 percent by weight of one or more thermoplastic polymers.

Disclosed is method for preparing a copolymer containing composition comprising: a) contacting the components of the polymerizable compositions disclosed herein; optionally in the presence of one or more radical polymerization initiators, optionally in the presence one or more inert solvents or diluents, under conditions such that a copolymer is formed; b) removing unreacted starting materials and solvent or diluent, if present; and c) removing the formed copolymer. The monomers may be contacted at a temperature of about 80°C to about 200°C for about 2 to about 10 hours using a mass polymerization process. The radical polymerization initiators may be present in an amount of about 0.001 to about 0.1 percent by weight of the mixture of the starting monomers. The method may comprise dispersing one or more impact modifiers into the monomer mixture before introduction of the mixture into a reactor; introducing the formed mixture into a reactor to produce a continuous matrix of the copolymer of the monomers and a dispersed phase comprising the impact modifier. The method may comprise dissolving or dispersing the monomer mixture and optionally the impact modifier in an inert solvent. The recovered copolymers may be blended with one or more impact modifiers.

Disclosed are articles prepared from the compositions disclosed herein. Such articles may be fabricated in any known manner commonly used with polymers containing one or more vinylidene substituted aromatic compounds. The articles may be fabricated by molding, extrusion, thermoforming, foaming, blow molding, injection molding, extrusion blow molding and combinations thereof. The articles may be molded, extruded, and the like. The articles disclosed may exhibit glass transition temperatures of about 100 ° C or greater. The copolymers, compositions and articles disclosed may be transparent or opaque. The copolymers, compositions and articles disclosed may exhibit a transparency of 85 percent or greater. The copolymers disclosed exhibit glass transition temperatures of about 100 ° C or greater, 110 °C or greater, 120 °C or greater or 140 °C or greater. The copolymers may exhibit a polydispersity of 3 or less. The copolymers may exhibit a polydispersity of 2 or greater. The biobased monomer content of the copolymers or compositions may be 10 percent by weight or greater, 15 percent by weight or greater or 20 percent by weight or greater. The copolymers may contain modern carbon or ¹⁴C.

### BRIEF DESCRIPTION OF THE DRAWINGS

Figure 1 shows the copolymer composition during polymerization for P1.
Figure 2 shows the copolymer composition during polymerization for P2.
Figure 3 shows the copolymer composition during polymerization for P3
Figure 4 shows the melt viscosities of P2, P3, P4 and P5 as a function of shear rate.
Figure 5 shows dynamic mechanical analysis of P2 compared to PS, SAN, ABS and PC.
Figure 6 shows the Melt rheology of P2 with acrylic core shell type impact modifier IM130P at different impact modifier levels
Figure 7 shows the Charpy impact resistance results for P2 at different impact modifier levels

### DETAILED DESCRIPTION

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Biobased monomer content means the percentage by weight of monomers in the copolymers derived from biologically based raw materials and not from petroleum based sources. Biobased monomers useful with the compositions described herein include monomers containing biobased carbon. The term biobased carbon means carbon obtained from a biological source rather than a fossil oil based source. The biobased content of a monomer, a copolymer, or a copolymer composition can be determined using a method such as ASTM D6866-08. ASTM D6866-08 provides three different methods for determining the biobased content of a solid, liquid, or gaseous composition. For example, the compositions described herein can be dried as a film and tested as a solid. As defined by ASTM D6866-08, biobased content is the amount of biobased carbon in the material or product as a percent of the weight (mass) of the total organic carbon in the product. In particular, ASTM D6866-08 Method B measures the ratios of ¹⁴C/¹²C and ¹³C/¹²C in the composition using Accelerator Mass Spectrometry (AMS) and Isotope Ratio Mass Spectrometry (IRMS). Fossil based carbon contains essentially no ¹⁴C because its age is much greater than the 5,730 year half-life of ¹⁴C. Thus, the presence and level of ¹⁴C in a composition provides a direct measure of the amount of carbon that originated from a source other than a fossil fuel, i.e., the level of biobased carbon in the composition. Copolymer as used herein refers to polymers containing the residue of two or more monomers. Carbon based on biological sources is referred to as modern carbon.

One or more as used herein means that at least one or more than one, of the recited components may be used as disclosed. Residual content, or residue, of a component is the amount of the component present in free form or reacted with another material, such as a polymer. The residual content of a component is calculated from the ingredients utilized to prepare the component or composition. Alternatively, it can be determined utilizing known analytical techniques. Heteroatom as used herein means nitrogen, oxygen, silicon, and sulfur; heteroatoms include nitrogen and oxygen. or oxygen. Hydrocarbyl refers to a group containing one or more carbon atom backbones and hydrogen atoms, which may optionally contain one or more heteroatoms. Where the hydrocarbyl group contains heteroatoms, the heteroatoms may form one or more functional groups well known in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified.

The polymerizable compositions and copolymers disclosed herein contain one or more cyclic (meth)acrylate esters. The cyclic (meth)acrylate esters contain a (meth)acryloyl radical bonded to a six-membered carbon ring, optionally containing a bridged ring and said group of monomers may include decahydronaphtyl (meth)acrylates, isobornyl (meth)acrylate, 2-norbornylmethyl methacrylate, cyclohexyl (meth)acrylate and adamantyl (meth)acrylates, and included are products according to the formula: 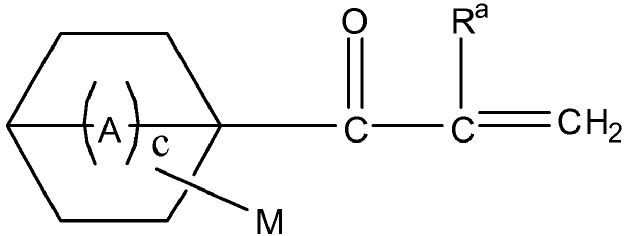
wherein R⁸ is separately in each occurrence H or -CH₃;
A is separately in each occurrence -CH₂-, -CH(CH₃)- or -C(CH₃)₂-; one or more M may be covalently bonded to any carbon of the cyclic rings and may be separately hydrogen, halogen, alkyl or alkylamino group, alkoxy group or a plurality thereof. Each M may be bonded to a carbon atom of the six-membered ring. There may be 0 to 4, 0 to 2, 0 to 1, or 0 of M present on the cyclic ring. c may be 0 or 1.

Non-limiting examples of the cyclic (meth)acrylate esters include isobornyl (meth)acrylate, bornyl (meth)acrylate, fenchyl (meth)acrylate, isofenchyl (meth)acrylate, norbornyl (meth)acrylate, cis, (endo) 3-methylamino-2-bornyl (meth)acrylate, 1,4,5,6,7,7-hexachlorobicyclo [2.2.1]-hept-5-ene-2-ol (meth)acrylate (HCBOMA) and 1,4,5,6,7,7-hexachlorobicyclo [2.2.1]-hept-5-ene-2 methanol (meth)acrylate (HCBMA), cyclohexyl (meth)acrylate, adamantyl (meth)acrylate, and mixtures of such bicyclic (meth)acrylates. The cyclic (meth)acrylate ester may be cyclohexyl (meth)acrylate, adamantyl (meth)acrylate, norbornyl methacrylate, isobornyl methacrylate or mixtures thereof. The cyclic (meth)acrylate ester may be isobornyl methacrylate. The cyclic (meth)acrylate esters are known per se and may be prepared in known fashion or may be obtained from commercial sources. The cyclic (meth)acrylates may be biobased compounds. Examples, of biobased monomers include, but are not limited to, isobornyl acrylate, isobornyl methacrylate, tetrahydrofurfuryl acrylate, tetrahydrofurfuryl methacrylate, and mixtures thereof. An example of an isobornyl acrylate includes SR506D (isobornyl acrylate) and an example of isobornyl (meth)acrylate includes SR423D (isobornyl methacrylate) (Sartomer Company; Exton, Pa.). An example of a tetrahydrofurfuryl acrylate includes SR285 (tetrahydrofurfuryl acrylate) and an example of a tetrahydrofurfuryl (meth)acrylate includes SR203 (tetrahydrofurfuryl methacrylate) (Sartomer Company). The Sartomer isobornyl acrylate SR506D contains 76.9% biobased carbon and the Sartomer tetrahydrofurfuryl acrylate SR285 contains 62.5% biobased carbon. The copolymers or polymerizable composition can have a biobased carbon content of 10 or greater weight percent based on the weight of the copolymer; of 12 or greater weight percent, 14 or greater weight percent, 16 or greater weight percent, 18 or greater weight percent, 20 or greater weight percent, 25 or greater weight percent, 30 or greater weight percent, 35 or greater weight percent, 40 or greater weight percent, 45 or greater weight percent, 50 or greater weight percent, 55 or greater weight percent, 60 or greater weight percent, 65 or greater weight percent, 70 or greater weight percent, 75 or greater weight percent, and up to 80 weight percent. The polymerizable composition or copolymer may contain a sufficient amount of cyclic (meth)acrylates to provide the desired biobased content, glass transition temperature as described herein.

The polymerizable compositions and copolymers disclosed herein contain cyclic (meth)acrylates in sufficient amount to provide the properties disclosed herein. The copolymers disclosed herein contain cyclic (meth)acrylates in an amount of about 20 percent by weight of the polymerizable compositions or copolymers or greater, about 35 percent by weight or greater about 40 percent by weight or greater, about 40 percent by weight or greater, or about 55 percent by weight or greater. The polymerizable compositions and copolymers disclosed herein contain cyclic (meth)acrylates in an amount of about 99 percent by weight of the polymerizable compositions or copolymers or less, about 95 percent by weight or less, about 90 percent by weight or less, about 80 percent by weight or less, about 70 percent by weight or less, or about 65 percent by weight or less.

The polymerizable compositions and copolymers disclosed herein may comprise one or more alkyl (meth)acrylates. (Meth)acrylate as used herein refers to compounds having a vinyl group bonded to the carbonyl moiety of an alkyl ester wherein the carbon of the vinyl group bonded to the carbonyl group further has a hydrogen or a methyl group bonded thereto. The term (meth) as used in this context refers to compounds having either of a hydrogen or methyl group on the carbon of the vinyl group bonded to the carbonyl group. Methacrylate as used herein refers to compounds having a vinyl group bonded to the carbonyl moiety of an alkyl ester wherein the carbon of the vinyl group bonded to the carbonyl group further has a methyl group bonded thereto. Acrylate as used herein refers to compounds having a vinyl group bonded to the carbonyl moiety of an alkyl ester wherein the carbon of the vinyl group bonded to the carbonyl group further has a hydrogen. The use of alkyl methacrylate without the parenthesis means the compound referred to has a methyl group on the carbon adjacent to the carbonyl group, that is R⁸ is methyl. The use of alkyl acrylate means the compound referred to does not have a methyl group on the carbon adjacent to the carbonyl group, that is R⁸ is hydrogen. The alkyl groups of the (meth)acrylates may have one or greater, two or greater, three or greater or four carbons in the alkyl group. The alkyl groups of the (meth)acrylates may have 30 or less, 10 or less, 6 or less or 4 or less carbons in the alkyl group. (Meth)acrylates useful include those that correspond to the formula: 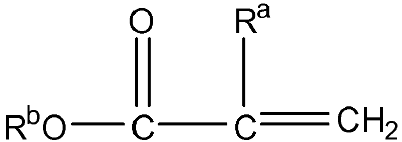
wherein R⁸ is separately in each occurrence H or -CH₃; and
R^{b} is separately in each occurrence an alkyl group that allows the (meth)acrylate form a homopolymer having a glass transition temperature of about 100 °C or greater. R^{b} may be a C₁ to C-₃₀ alkyl group, C₁₋₁₀ alkyl group, C₁₋₆ alkyl group, C₁₋₄ alkyl group or C₁ alkyl. R^{b} may be a C₂ to C-₃₀ alkyl group, C₂₋₁₀ alkyl group, C₂₋₆ alkyl group or C₃₋₄ alkyl group. The (meth)acrylates may contain a mixture of (meth)acrylates such that for one (meth)acrylate R^{b} is C₁ and for one or more other the other R^{b} may be a C₂₋₃₀ alkyl group, C₂₋₁₀ alkyl group, C₂₋₆ alkyl group or C₃₋₄ alkyl group The one or more (meth)acrylates may include include methyl (meth)acrylate and one or more of ethyl (meth)acrylate, propyl (meth)acrylate, butyl (meth)acrylate, pentyl (meth)(acrylate) and hexyl (meth) acrylate. Examples of the one or more (meth)acrylates include lower alkyl (meth)acrylates, such as methyl (meth)acrylate, ethyl (meth)acrylate, propyl (meth)acrylate, butyl (meth)acrylate, pentyl (meth)(acrylate) and hexyl (meth) acrylate. The one or more (meth)acrylates may include include methyl (meth)acrylate and one or more of ethyl (meth)acrylate, propyl (meth)acrylate, butyl (meth)acrylate, pentyl (meth)(acrylate) and hexyl (meth) acrylate. The one or more (meth)acrylates may include methyl (meth)acrylate and butyl (meth)acrylate. The one or more (meth)acrylates in the polymerizable composition may be present in sufficient amount to provide the desired properties of the copolymer such as processability, practical toughness, refractive index, biobased content, scratch resistance, environmental stress crack resistance, hydrolytic stability, thermal stability, UV stability, impact resistance, weatherability, and the like. The polymerizable compositions and copolymers disclosed herein contain (meth)acrylates in an amount of about 0 percent by weight of the polymerizable composition or copolymers or greater, about 1 percent by weight or greater or about 2 percent by weight or greater, 5 percent by weight or greater, 10 percent by weight or greater, 20 percent by weight or greater or 30 percent by weight or greater. The polymerizable composition and copolymers disclosed herein contain (meth)acrylates in an amount of about 80 percent by weight of the polymerizable composition or copolymers or less, about 65 percent by weight or less about 35 percent by weight or less, about 30 percent by weight or less, about 20 percent by weight or less, about 15 percent by weight or less, about 15 percent by weight or less or about 10 percent by weight or less or 1 percent by weight or less.

The polymerizable compositions may comprise one or more cyclic (meth)acrylate esters, one or more alkyl methacrylates, such as methyl methacrylate, and one or more C₂₋₈ alkyl acrylates. The amounts of the one or more cyclic (meth)acrylate esters and one or more alkyl methacrylates are as disclosed herein. The one or more C₂₋₈ alkyl acrylates are present to improve the processability of the copolymers prepared. The one or more alkyl acrylates may be a C₂₋₄ acrylate or butyl acrylate. The one or more C₂₋₈ alkyl acrylates are present in a sufficient amount to improve the processability of the copolymers prepared. The one or more C₂₋₈ alkyl acrylates may be present in an amount of about 1.0 percent by weight of the polymerization composition or copolymers or greater, about 5 percent or greater or about 10 percent by weight or greater. The one or more C₂₋₈ alkyl acrylates may be present in an amount of about 30 percent by weight of the polymerization composition or copolymers or less, about 25 percent or less or about 20 percent by weight or less.

The polymerizable compositions and copolymers disclosed herein may comprise one or more monomers polymerizable by free radical polymerization. The one or more monomers polymerizable by free radical polymerization may copolymerize with the other monomers disclosed herein. The one or more monomers polymerizable by free radical polymerization may contain unsaturated groups. In this context the monomers polymerizable by free radical polymerization do not include or are not alkyl or cyclic (meth)acrylates,. The monomers polymerizable by free radical polymerization may comprise one or more of acrylamides, methacrylamides, unsaturated nitriles, vinyl esters, vinylidene substituted aromatic compounds, olefins, isocyanates, conjugated dienes, vinyl monomers, N-vinyl pyrollidone; allyl methacrylate, vinyl toluene, vinyl benzophenone, diallyl phthalate, maleic anhydride and divinyl benzene. Exemplary vinyl esters include vinyl acetate and vinyl propionate. Exemplary vinyl monomers include vinyl chloride, vinylidene chloride and N-vinyl pyrollidone. Exemplary conjugated dienes include butadiene and isoprene. Unsaturated nitriles include, but are not limited to, acrylonitrile, methacrylonitrile, ethacrylonitrile, fumaronitrile and mixtures thereof. The unsaturated nitrile may be acrylonitrile. The use of the term "(meth)" followed by another term such as acrylate, acrylonitrile, or acrylamide, as used throughout the disclosure, refers to both acrylate, acrylonitrile, or acrylamide and methacrylate, methacrylonitrile, or methacrylamide.

Vinylidene substituted aromatic monomers comprise vinylidene, alkenyl groups, bonded directly to aromatic structures. The vinylidene substituted aromatic monomers may contain one or more aromatic rings, may contain one or two aromatic rings, or may contain one aromatic ring. The aromatic rings can be unsubstituted or substituted with a substituent that does not interfere with polymerization of the vinylidene substituted aromatic monomers, or the fabrication of the polymers formed into desired structures. The substituents may be halogens or alkyl groups, such as bromine, chlorine or C₁₋₋₄ alkyl groups; or a methyl group. Alkenyl groups comprise straight or branched carbon chains having one or more double bonds, or one double bond. The alkenyl groups useful for the vinylidene substituted aromatic monomers may include those that when bonded to an aromatic ring are capable of polymerization to form copolymers. The alkenyl groups may have 2 to 10 carbon atoms, 2 to 4 carbon atoms or 2 carbon atoms. Exemplary vinylidene substituted aromatic monomers include styrene, alpha methyl styrene, N-phenyl-maleimide and chlorinated styrenes; or alpha-methyl styrene and styrene. The vinylidene substituted aromatic monomers may be mono-vinylidene aromatic monomers, which contain one unsaturated group. Vinylidene aromatic monomers include but are not limited to those described in U.S. Pat. Nos. 4,666,987; 4,572,819 and 4,585,825, which are herein incorporated by reference.

Vinylidene substituted aromatic monomers comprise vinylidene, alkenyl groups bonded directly to aromatic structures. The vinylidene substituted aromatic monomers may contain one or more aromatic rings, may contain one or two aromatic rings, or may contain one aromatic ring. The aromatic rings can be unsubstituted or substituted with a substituent that does not interfere with polymerization of the vinylidene substituted aromatic monomers, or the fabrication of the polymers formed into desired structures. The substituents may be halogens or alkyl groups, such as bromine, chlorine or C₁ to C₄ alkyl groups; or a methyl group. Alkenyl groups comprise straight or branched carbon chains having one or more double bonds, or one double bond. The alkenyl groups useful for the vinylidene substituted aromatic monomers may include those that when bonded to an aromatic ring are capable of polymerization to form copolymers. The alkenyl groups may have 2 to 10 carbon atoms, 2 to 4 carbon atoms or 2 carbon atoms. Exemplary vinylidene substituted aromatic monomers include styrene, alpha methyl styrene, N-phenyl-maleimide and chlorinated styrenes; or alpha-methyl styrene and styrene. The vinylidene substituted aromatic monomers may be mono-vinylidene aromatic monomers, which contain one unsaturated group. Vinylidene aromatic monomers include but are not limited to those described in U.S. Pat. Nos. 4,666,987; 4,572,819 and 4,585,825, which are incorporated by reference. The monomer may correspond to the formula: 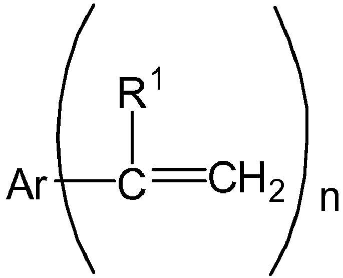
Wherein R¹ is separately in each occurrence hydrogen or methyl; and
Ar is separately in each occurrence an aromatic group. Ar may contain one or more aromatic rings, may contain one or two aromatic rings, or may contain one aromatic ring. n is separately in each occurrence 1 to 3, 1 to 2 or 1. The aromatic rings can be unsubstituted or substituted with a substituent that does not interfere with polymerization of the vinylidene substituted aromatic monomers, or the fabrication of the polymers formed into desired structures. The substituents may be halogens or alkyl groups, such as bromine, chlorine or C₁ to C₄ alkyl groups; or a methyl group.

The polymerizable compositions and copolymers disclosed herein contain one or more compounds polymerizable by free radical polymerization; in an amount of about 0 percent by weight of the copolymers or greater, about 1 percent by weight or greater or about 2 percent by weight or greater, 5 percent by weight or greater, 10 percent by weight or greater, 20 percent by weight or greater or 30 percent by weight or greater. The copolymers disclosed herein may contain one or more compounds polymerizable by free radical polymerization; in an amount of about 80 percent by weight of the or copolymers or less, 65 percent by weight or less, about 35 percent by weight or less, about 30 percent by weight or less, about 20 percent by weight or less, about 15 percent by weight or less, about 15 percent by weight or less or about 10 percent by weight or less or 1 percent by weight.

The vinylidene substituted aromatic monomers may be present in the polymerizable composition or copolymers in a sufficient amount such that the polymer exhibits the advantageous properties associated with polymers of vinylidene substituted aromatic monomers, for instance polystyrene. The advantageous properties of polymers of vinylidene substituted monomers include glass transition temperatures of about 100 °C or greater, transparency where desired for the use, high heat deflection temperatures, and the like. The copolymers disclosed herein may contain vinylidene substituted aromatic monomers in an amount of about 0 percent by weight of the polymerizable compositions or copolymers or greater, about 1 percent by weight or greater or about 20 percent by weight or greater. The copolymers disclosed may contain vinylidene substituted aromatic monomers in an amount of about 80 percent by weight of the polymerizable compositions or copolymers or copolymers or less, 65 percent by weight or less, about 35 percent by weight or less, about 30 percent by weight or less or about 10 percent by weight or less or about 1 percent. The recited amounts may relate to the amounts of vinylidene substituted aromatic monomers.

The polymerizable compositions may contain branching agents commonly used in vinylidene aromatic based polymers. The branching agents may be vinylidene substituted aromatic monomers having 2 or more vinylidene groups. Other branching agents may include other difunctional and in general multifunctional (functionality >2) monomers, multifunctional initiators and multifunctional chain transfer agents and the like. The branching agents may be present in the polymerizable compositions in an amount of about 0.001 percent by weight of the composition or greater, about 0.002 percent by weight or greater or about 0.003 percent by weight or greater. The branching agents may be present in the polymerizable compositions in an amount of about 0.5 percent by weight of the composition or less, about 0.2 percent by weight or less or about 0.1 percent by weight or less.

The polymerizable compositions and copolymers disclosed herein may further comprise one or more unsaturated nitriles. Unsaturated nitriles include, but are not limited to, acrylonitrile, methacrylonitrile, ethacrylonitrile, fumaronitrile and mixtures thereof. The unsaturated nitrile may be acrylonitrile. The unsaturated nitriles are used in the polymerizable compositions and copolymers to enhance the glass transition temperature, transparency, chemical resistance and the like. The polymerizable compositions and copolymers disclosed herein contain one or more unsaturated nitriles in an amount of about 0 percent by weight of the polymerizable compositions or copolymers or greater, about 1 percent by weight or greater or about 2 percent by weight or greater. The polymerizable compositions and copolymers disclosed herein may contain one or more unsaturated nitriles in an amount of about 35 percent by weight of the polymerizable compositions or copolymers or less, about 20 percent by weight or less, about 10 percent by weight or less or about 1 percent by weight.

Other vinyl monomers may also be included in the polymerizable composition and copolymer, in sufficient amount to provide the desired properties as disclosed herein, including conjugated 1,3 dienes (for example butadiene, isoprene, etc.); alpha- or beta-unsaturated monobasic acids and derivatives thereof (for example, acrylic acid, methacrylic acid, etc.); vinyl halides such as vinyl chloride, vinyl bromide, etc.; vinylidene chloride, vinylidene bromide, etc.; vinyl esters such as vinyl acetate, vinyl propionate, etc.; ethylenically unsaturated dicarboxylic acids and anhydrides and derivatives thereof, such as maleic acid, fumaric acid, maleic anhydride, dialkyl maleates or fumarates, such as dimethyl maleate, diethyl maleate, dibutyl maleate, the corresponding fumarates, N-phenyl maleimide (N-PMI), etc.; and the like. These additional comonomers can be incorporated in to the composition in several ways including, interpolymerization with the vinylidene substituted aromatic containing copolymer and/or polymerization into polymeric components which can be combined, for example blended in to the matrix. If present, the amount of such comonomers may be equal to or less than about 20 weight percent, equal to or less than about 10 weight percent or equal to about 5 weight percent based on the total weight of the polymeric composition. Such co-monomers may be present in an amount of about 0 weight percent or greater or 1 percent by weight or greater.

The polymerizable compositions and copolymers disclosed herein may comprise one or more cyclic (meth)acrylate esters; one or more alkyl (meth)acrylates; and one or more unsaturated compounds containing nucleophilic groups or electrophilic groups; and optionally any other of the other polymerizable compounds disclosed herein. The one or more unsaturated compounds containing nucleophilic groups may contain any nucleophilic group that reacts with an electrophilic group under the conditions described herein. Nucleophilic group as used herein is a group which donates an electron pair to make a covalent bond. Exemplary nucleophilic groups include carboxylic acid, alcohol, phenol, amine, aniline, imidazole, tetrazole, thiol, boronic acid, glycol, hydrazine and hydroxyl amine groups. Nucleophilic groups may be carboxylic acid groups. The one or more unsaturated compounds containing nucleophilic groups may be (meth) acrylic acids, (meth)acrylates, hydroxyalkyl methacrylates, and the like. The one or more unsaturated compounds containing nucleophilic groups may be methacrylic acid and or acrylic acid. The one or more unsaturated compounds containing electrophilic groups may contain any electrophilic group that reacts with a nucleophilic group under the conditions described herein. Electrophilic group as used herein is a group which receives an electron pair to form a covalent bond. Exemplary electrophilic groups include epoxide, anhydride, imide, ester, acyl halide, acyl nitrile, aldehyde, ketone, isocyanate and isothiocyanate groups. Electrophilic groups may be epoxide groups. The one or more unsaturated compounds containing electrophilic groups may be glycidyl (meth)acrylates, and the like. The polymerizable compositions and copolymers disclosed herein may contain one or more unsaturated compounds containing nucleophilic groups or electrophilic groups in an amount of about 0 percent by weight of the polymerizable composition or copolymers or greater, about 0.1 percent by weight or greater about 1.0 percent by weight or greater or about 2.0 percent by weight or greater. The polymerizable composition and copolymers disclosed herein contain one or more unsaturated compounds containing nucleophilic groups or electrophilic groups in an amount of about 10 percent by weight of the polymerizable composition or copolymers or less, about 5.0 percent by weight or less, or about 2.0 percent by weight or less.

The compositions disclosed may contain impact modifiers. The terms impact modifiers and rubbers are used interchangeably. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, interpolymers of rubber-forming monomers with other copolymerizable monomers and mixtures thereof.. The rubbers may be present in the formulated composition in sufficient amount to provide the desired impact properties to the composition. Desired impact properties include increased izod, charpy, gardner, tensile, falling dart, and the like. The compositions disclosed herein contain impact modifiers (rubbers) in an amount of about 0.5 percent by weight of the compositions or greater, about 1 percent by weight or greater or about 2 percent by weight or greater. The compositions disclosed herein contain impact modifiers (rubbers) in an amount of about 50 percent by weight of the compositions or less, about 45 percent by weight or less, about 40 percent by weight or less, about 30 percent by weight or less, about 20 percent by weight or less or about 10 percent by weight or less. The compositions disclosed herein contain the copolymer in an amount of about 50 percent by weight of the compositions or greater. The compositions disclosed herein contain copolymer in an amount of about 99.5 percent by weight of the compositions or less, 90 percent by weight of the compositions or less, 80 percent by weight of the compositions or less or 60 percent by weight of the compositions or less. Compositions, formulated compositions, as used in this context are the formulated compositions containing all of the ingredients for the intended use.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and copolymers of 1,3-butadiene with one or more copolymerizable monomers, such as vinylidene substituted aromatic (styrene). The diene rubber may be the homopolymer of 1,3-butadiene. Exemplary copolymers of 1,3-butadiene are block or tapered block rubbers of at least about 30 weight percent 1,3-butadiene, from about 50 weight percent, from about 70 weight percent, or from about 90 weight percent 1,3-butadiene and up to about 70 weight percent vinylidene substituted aromatic monomer, up to about 50 weight percent, up to about 30 weight percent, or up to about 10 weight percent vinylidene substituted aromatic monomer, weights based on the weight of the 1,3-butadiene copolymer.

The impact modifiers employed may be those polymers and copolymers which exhibit a second order transition temperature, sometimes referred to as the glass transition temperature (Tg), for the diene fragment which is 0° C or less or -20° C or less as determined using conventional techniques, for example ASTM Test Method D 746-52 T. Tg is the temperature or temperature range at which a polymeric material shows an abrupt change in its physical properties, including, for example, mechanical strength. Tg can be determined by differential scanning calorimetry (DSC). The diene rubber may have a cis content equal to or less than 99 percent or less than 97 percent. The cis content of the diene rubber may be equal to or greater than 20 percent or greater than 37 percent wherein the cis weight percent is based on the weight of the diene rubber. The rubber may be a 1,3-butadiene rubber having at least about 1 weight percent 1,2-vinyl or at least about 7 weight percent 1,2-vinyl based on the weight of the 1,3-butadiene rubber. The 1,3-butadiene rubber may have less than or equal to about 30 weight percent 1,2-vinyl or less than or equal to about 13 weight percent 1,2-vinyl based on the weight of the 1,3-butadiene rubber. The diene rubber may have a weight average molecular weight of at least about 100 kilogram per mole (kg/mole)- or a weight average molecular weight of at least about a 300 kg/mole. The diene rubber may have a weight-average molecular weight equal to or less than about 900 kg/mole or a weight average molecular weight equal to or less than 600 kg/mole. The diene rubber having a solution viscosity of at least 10 centi Stokes (cSt) (10 percent (%) solution in styrene) or a solution viscosity of about 30 cSt. The diene rubber may have a solution viscosity equal to or less than about 500 cSt or equal to or less than about 400 cSt. The rubber, with graft and/or occluded polymers if present, may be dispersed in the continuous matrix phase of the copolymer as discrete particles. The rubber particles may comprise a range of sizes having a mono-modal, bimodal, or multimodal distribution. The average particle size of a rubber particle, as used herein, will, refer to the volume average diameter. In most cases, the volume average diameter of a group of particles is the same as the weight average. The average particle diameter measurement generally includes the polymer grafted to the rubber particles and occlusions of polymer within the particles. Unless otherwise specified, the rubber particle sizes disclosed and claimed herein are determined on a Coulter Multisizer II or II e with the ACCUCOMP™ Software Version 2.01 by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml or an electrolyte solution (1 percent of NH₄SCN in DMF) is mixed with 0.2 ml of the sample solution. The coulter measuring stand is used with 20 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be equal to or greater than about 0.05 micrometers (microns) (µm), equal to or greater than about 0.1 micrometers, and about 0.5 micrometers. The average particle size of the rubber particles may be equal to or less than about 10 micrometers, preferably equal to or less than about 5 micrometers, or equal to or less than about 4 micrometers.

The impact modifier may have a core shell rubber morphology. The impact modifier or rubber may be a core shell rubber. Any core shell rubber that improves the impact properties of the copolymer may be used. Exemplary core shell rubbers include silicone based core shell rubbers, acrylic core shell rubbers, ethylene-ethyl acrylate core shell rubbers, thermoplastic polyurethane based rubbers. The amount of such core shell rubbers and particle sizes are as disclosed herein.

The disclosed compositions may also contain one or more additives commonly used in compositions of this type. Such additives may include colorants, mold, release agents, flow modifiers, UV absorbers, light stabilizers, fillers, fibers, anti-oxidants, heat stabilizers,, ignition resistant additives, antistats, silicon oils, etc. Ignition resistance additivesinclude halogenated hydrocarbons, halogenated carbonate oligomers, halogenated diglycidyl ethers, organophosphorous compounds, fluorinated olefins, antimony oxide and metal salts of aromatic sulfur, or mixtures thereof. Compounds which stabilize mass polymerized rubber-modified vinylidene substituted aromatic copolymer compositions against degradation caused by, but not limited to heat, light, and oxygen, or a mixture thereof may be used. Fillers and reinforcements may also be present. Exemplary fillers include talc, clay, wollastonite, mica, glass or a mixture thereof. Such additives and/or fillers may be present in the formulated compositions in an amount about 0.01 percent by weight or greater, about 0.1 percent by weight or greater, about 1 percent by weight or greater, about 2 percent by weight or greater, or about 3 percent by weight or greater based on the weight of the compositions. The additives and/or fillers may be present in an amount of about 40 percent by weight or less, about 30 percent by weight or less, about 20 percent by weight or less, about 15 percent by weight or less, about 10 percent by weight or less, about 5 percent by weight or less based on the weight of the composition. The additives may be present in amounts up to 5 weight percent while fillers may be present in amounts up to 40 weight percent based on the weight of the compositions.

Various techniques for producing the copolymers are disclosed. Examples of these known polymerization processes include bulk, mass-solution, or mass-suspension polymerization, generally known as mass polymerization processes. For a good discussion of how to make monovinylidene aromatic copolymer containing compositions see "Modern Styrenic Polymers" of Series In Polymer Science (Wiley), Ed. John Scheirs and Duane Priddy, ISBN 0 471 497525, incorporated herein by reference; see also, for example, U.S. Pat. Nos. 3,660,535; 3,243,481; and 4,239,863, which are incorporated herein by reference. Continuous mass polymerization techniques are advantageously employed in preparing the copolymers. The polymerization may conducted in one or more substantially linear, stratified flow or so-called "plug-flow" type reactors such as described in U.S. Pat. No. 2,727,884, sometimes referred to as multizone plug flow bulk process, which may or may not comprise recirculation of a portion of the partially polymerized product or, alternatively, in a stirred tank reactor wherein the contents of the reactor are essentially uniform throughout, which is generally employed in combination with one or more plug-flow type reactors. The stirred tank reactors can be boiling and/or coil reactors. Such reactors can be used in series. Processes for use of the stirred tank reactors for preparing copolymers are disclosed in Modern Styrenic Polymers, Edited by John Schiers and Duane Priddy, Wiley, ISBN 0 471 49752 5, published in 2003, see pp 43-72, relevant portions incorporated herein by reference. Alternatively, a parallel reactor set-up, as taught in EP 412801, may also be suitable for preparing the copolymers, relevant portions are incorporated herein by reference.

Multizone plug flow bulk processes include a series of polymerization vessels (or towers), consecutively connected to each other, providing multiple reaction zones. A mixture of monomers used to prepare the copolymer is formed and then fed into the reaction system. A rubber, for example butadiene rubber may be dissolved in the mixture monomers before being fed into the reaction system. The polymerization can be thermally or chemically initiated, and viscosity of the reaction mixture will gradually increase. During the reaction course, where present, the rubber may become grafted with the copolymer and, in the rubber solution, bulk copolymer (referred to also as free copolymer or matrix copolymer or non-grafted copolymer) is also formed. At a point where the free copolymer cannot be "held" in one single, continuous "phase" of rubber solution, it begins to form domains of copolymer dissolved in monomer and solvent. The polymerization mixture now is a two-phase system. As polymerization proceeds, more and more free copolymer is formed, and the rubber phase starts to disperse itself (rubber domains) in the matrix of the ever-growing free copolymer phase. Eventually, the free copolymer becomes a continuous phase. Some copolymer is occluded inside the rubber particles as well. Pre-phase inversion means that the rubber solution is a continuous phase and that no rubber particles are formed, and post phase inversion means that substantially all of the rubber phase has converted to rubber domains and there is a continuous copolymer phase. Following the phase inversion, more matrix copolymer may be formed

A feed with a functional monomer such as N-phenyl maleimide that increases the Tg of the matrix and also the heat resistance of the product can be added in one or more location throughout the polymerization process, the location(s) may be the same or different from where the co-monomers are added, for example see U.S. Pat. Nos. 5,412,036 and 5,446,103, which are incorporated herein by reference.

A feed with a functional additive such as ethylene-bisstearamide, dialkyladipates, polydimethylsiloxane, or other lubricants or release agents that increases the processability of the product can be added in one or more location throughout the polymerization, devolatization and conveying process, the location(s) may be the same or different from where the co-monomers are added.

When a desirable monomer conversion level and a matrix copolymer of desired molecular weight distribution is obtained, where rubber is present, the polymerization mixture may then be subjected to conditions sufficient to cross-link the rubber and remove any unreacted monomer and solvent. Such cross-linking and removal of unreacted monomer, as well as removal of diluent or solvent, if employed, and other volatile materials is advantageously conducted employing conventional devolatilization techniques, such as introducing the polymerization mixture into a devolatilizing chamber, flashing off the monomer and other volatiles at elevated temperatures, for example, from 130° C to 300° C. and/or under vacuum and removing them from the chamber. Thereafter the polymer may be extruded, and bulk pellets obtained from a pelletizer.

The temperatures at which polymerization is conducted are dependent on a variety of factors including the specific initiator and type and concentration of rubber, comonomers, reactor set-up (for example, linear, parallel, recirculation, etc.), and reaction solvent, if any, employed. Polymerization temperatures from 60° C to 160° C may be employed prior to phase inversion with temperatures from 100° C to 200° C. being employed subsequent to phase inversion. Mass polymerization at such elevated temperatures may be continued until the desired conversion of monomers to polymer is obtained. Generally, conversion (also sometimes referred to as percent solids) of from 55 to 90, or 60 to 85, weight percent of the monomers added to the polymerization system (that is, monomers added in the feed and any additional stream, including any recycle stream) to polymer is desired. Percent solids is the ratio of the weight of the solids (for example, rubber plus matrix (co)polymer) to the weight of the reaction mixture (for example, unpolymerized monomer(s)) expressed in percent at any specified time during the polymerization reaction.

A polymer's molecular weight is directly related to the entanglement effects contributing to its rheological and physical properties. The molecular weight of the matrix copolymer produced in the grafting reactor during the production of the rubber-modified vinylidene aromatic substituted copolymer can be adjusted by the addition of a suitable chain transfer agent. Chain transfer agents, or molecular weight regulators, are substances which can undergo atom or group transfer or an addition-elimination. Organic molecules with labile hydrogens and are well known, for example, alpha-methyl styrene dimer, mercaptans or thiols such as n-dodecylmercaptan (nDM) and thioglycolate, disulfides, dithiauram disulfides, monosulfides, halides or halocarbons, common solvents and certain unsaturated compounds such as allyl peroxides, allyl halides, allyl sulfides, and terpenes such as terpinoline. Also transition metal complexes as cobalt(II) porphyrin complexes can be used as chain transfer agents. Chain transfer agents are added in an amount from about 0.0001 to 10 weight percent based on the weight of the reaction mixture (that is, rubber, monomer(s), and solvent, if any). The chain transfer agent may be added in an amount equal to or greater than about 0.001 weight percent, about 0.002, or about 0.003 weight percent based on the weight of the reaction mixture. The chain transfer agent may be added in an amount equal to or less than about 0.5 weight percent, about 0.2, or about 0.1 weight percent based on the weight of the reaction mixture.

The chain transfer agent may be added all at once in one reactor zone or it may be added in two or more reactor zones. Chain transfer agent may be added before phase inversion, during rubber particle sizing, more may be added after particle sizing to help control the matrix molecular weight, and optionally more may be added later to fine tune the matrix molecular weight/molecular weight distribution. The chain transfer agent may be added at the beginning of the polymerization (in other words, at a time where the percent solids for the reaction mixture is equal to the weight percent rubber) in a first amount equal to or greater than 0.001 weight percent, from about 0.002 and about 0.1 weight percent, or from about 0.003 and about 0.05 weight percent based on the weight of the reaction mixture. The amount of chain transfer agent added later, for example after about 40 percent solids, 30 percent solids, is added in a second amount equal to or less than about 0.7 weight percent, about 0.001 to about 0.6 weight percent, or from about 0.002 to about 0.5 weight percent based on the weight of the reaction mixture. The molecular weight of the matrix copolymer depends on, among other things, how much chain transfer agent is used and when it is added.

The monomers and optionally rubber or rubber precursors in the reaction mixture may be dissolved or dispersed in an inert solvent. Useful solvent families are aromatics, ketones, alkanes. An exemplary solvent is ethyl benzene. The solids level of monomers and rubbers or rubber precursors in the solvent may be chosen to facilitate efficient formation of the copolymer and optionally dispersed rubber in the copolymer. Solids level as used in this context is the amount of the monomers and optionally rubber in the reaction mixture expressed as weight percent. The solids level of monomers and optionally rubber or rubber precursors in the reaction mixture is about 60 percent by weight or greater based on the reaction mixture, is about 65 percent by weight or greater or is about 70 percent by weight or greater. The solids level of monomers and optionally rubber or rubber precursors in the reaction mixture is about 95 percent by weight or less based on the reaction mixture, is about 90 percent by weight or less or is about 85 percent by weight or less.

The residence time of the reaction mixture in the reactors is sufficient to prepare copolymers having the desired molecular weight. The residence time of the reaction mixture in the reactors may be about 1 hour or greater, about 1.5 hours or greater or about 2 hours or greater. The residence time of the reaction mixture in the reactors may be about 10 hours or less, about 9 hours or less or about 8 hours or less. The molecular weight of the copolymer may be about 100,000 g/Mole or greater, about 120,000 g/Mole or greater, about 130,000 g/Mole or greater or about 140,000 g/Mole or greater. The molecular weight of the copolymer may be about 400,000 g/Mole or less, about 350,000 g/Mole or less or about 325,000 g/Mole or less. Molecular weight is determined by gas permeation chromatography using polystyrene standards. The copolymers may exhibit a transparency of about 85 percent by weight or greater, 86 percent by weight or greater or about 87 percent by weight or greater. The copolymers exhibit a glass transition temperature of 100 °C or greater, about 110 °C or greater, about 120 °C or greater, or about 125 °C or greater. The copolymers exhibit a glass transition temperature of about 145 °C or less or about 140 °C or less. The copolymers containing dispersed rubber may be opaque or clear provided the ratio of the one or more monovinylidene aromatic compounds to the one or more cyclic (meth)acrylate esters is in an acceptable range

The process may be performed in the presence of a radical initiator. Any radical initiator that enhances the formation of the copolymers may be used. Exemplary classes of initiators include free radical initiators such as peroxide and azo compounds which will accelerate the polymerization. Exemplary initiators include but are not limited to tertiary butyl peroxyacetate, dibenzoyl peroxide, dilauroyl peroxide, t-butylhydroperoxide, ditertiary-butylperoxide, cumene hydroperoxide, dicumylperoxide, 1,1-bis(tertiary-butylperoxy)-3,3,5-trimethyl-cyclohexane, t-butylperoxybe nzoate, 1,1-bis(t-butylperoxy)-cyclohexane, benzoylperoxide, succinoylperoxide and t-butylperoxypivilate, and azo compounds such as azobisisobutyro-nitrile, azobis-2,4-dimethylvaleronitrile, azobiscyclohexanecarbo-nitrile, azobismethyl isolactate and azobiscyanovalerate. Typical amounts are well known in the art and may be used in the disclosed process. The radical initiators may be utilized in a sufficient amount to enhance the polymerization of the monomers to form a copolymer, including increasing the rate of polymerization. Initiators may be employed in a range of concentrations dependent on a variety of factors including the specific initiators employed, the desired levels of polymer grafting and the conditions at which the mass polymerization is conducted, such as from 50 to 2000, preferably from 100 to 1500, parts by weight of the initiator are employed per million parts by weight of monomers. The radical initiators may be present in an amount of about 0.001 percent by weight or greater based on the weight of the monomers present, about 0.002 percent by weight or greater or about 0.003 percent by weight or greater. The radical initiators may be present in an amount of about 0.1 percent by weight or less based on the weight of the co-monomers present, about 0.08 percent by weight or less or about 0.05 percent by weight or less.

The copolymers disclosed may be blended with thermoplastic polymers. The thermoplastic polymers may be any thermoplastic polymers which form a useful blend with the copolymers. The thermoplastic polymers can be any polymers that are transparent. Exemplary thermoplastic polymers include poly(meth)acrylates, polycarbonates, polyesters, polymers containing vinylidene substituted aromatic monomers, and the like. Examples of the thermoplastic polymers include polymethyl methacrylate, polystyrene, acrylonitrile-butadiene-styrene, styrene acrylonitrile, polybutyl acrylate, and the like. The amount of the copolymers disclosed and other thermoplastic polymers are chosen to provide the desired properties. The amount of copolymers disclosed in the blend may be about 99.5 percent by weight or less based on the weight of the blend, about 70 percent by weight or less or about 60 percent by weight or less. The amount of copolymers disclosed in the blend may be about 50 percent by weight or greater based on the weight of the blend or about 60 percent by weight or greater. The amount of thermoplastic polymers disclosed in the blend may be about 50 percent by weight or less based on the weight of the blend, about 40 percent by weight or greater or about 30 percent by weight or greater. The amount of thermoplastic polymers disclosed in the blend may be about 0.5 percent by weight or greater based on the weight of the blend, about 10 percent by weight or greater or about 30 percent by weight or greater. The blends may be formed my mixing or extrusion.

The pellets of the formulated composition may be extruded to form sheets. The sheets may be thermoformed into shaped articles. Alternatively, the formulated compositions may be molded into articles.

### Embodiments

1. A composition comprising a) from about 20 to about 99 percent by weight of one or more cyclic (meth)acrylate esters; b) from about 1 to 80 percent by weight of one or more alkyl (meth)acrylates; and c) one or more of features i to iv;
   i) the one or more alkyl (meth)acrylates have two or more carbons in the alkyl group;
   ii) the one or more alkyl (meth)acrylates contain one or more alkyl methacrylates and one or more C 2-8 alkyl acrylates;
   iii) one or more unsaturated compounds containing nucleophilic groups or electrophilic groups;
   iv) one or more ingredients selected from impact modifiers, colorants, mold release agents, flow modifiers, UV absorbers, light stabilizers, fillers, fibers, anti-oxidants, and heat stabilizers;
   wherein the composition forms copolymers and the percent by weight is based on the weight of the composition.
2. The composition according to Embodiment 1 containing d) from about 1 to about 70 percent by weight of one or more compounds polymerizable by free radical polymerization.
3. The composition according to Embodiment 1 or 2 wherein the one or more alkyl (meth)acrylates have two or more carbons in the alkyl group.
4. The composition according to Embodiment 1 or 2 wherein the one or more alkyl (meth)acrylates contain one or more alkyl methacrylates and one or more C 2-8 alkyl acrylates.
5. The composition according to Embodiment 4 wherein the one or more alkyl methacrylates is methyl methacrylate and one or more C 2-8 alkyl acrylates is butyl acrylate.
6. The composition according to Embodiment 1 or 2 containing one or more unsaturated compounds containing nucleophilic groups or electrophilic groups.
7. The composition according to Embodiment 6 containing from about 0.1 to about 10 percent by weight of one or more unsaturated compounds containing nucleophilic groups or electrophilic groups based on the weight of the composition.
8. The composition according to Embodiment 6 or 7 wherein the nucleophilic groups are one or more of carboxylic acid, alcohol, phenol, amine, aniline, imidazole, tetrazole, thiol, boronic acid, glycol, hydrazine and hydroxyl amine groups and the electrophilic groups are one or more of epoxide, anhydride, imide, ester, acyl halide, acyl nitrile, aldehyde, ketone, isocyanate and isothiocyanate groups.
9. The composition according to any one of Embodiments 6 to 8 wherein the nucleophilic groups are carboxylic acid groups.
10. The composition according to any one of any one of Embodiments 6 to 8 wherein the electrophilic groups are one or more epoxide groups.
11. The composition according to any one of the preceding Embodiments containing one or more ingredients selected from impact modifiers, colorants, mold release agents, flow modifiers, UV absorbers, light stabilizers, fillers, fibers, anti-oxidants and heat stabilizers.
12. The composition according to any one of the preceding Embodiments containing one or more impact modifiers.
13. The composition according to any one of the preceding Embodiments comprising from about 20 to about 95 percent by weight of one or more cyclic (meth)acrylate esters, one or more alkyl (meth)acrylates, one or more compounds polymerizable by free radical polymerization and/or one or more unsaturated compounds containing nucleophilic groups or electrophilic groups based on the weight of the composition; and from about 0.5 to about 50 percent by weight of the impact modifier based on the weight of the composition.
14. The composition according to any one of the preceding Embodiments wherein the impact modifier is a polybutadiene rubber or an acrylic based core shell rubber.
15. The composition according to any one of Embodiments the preceding Embodiments wherein the impact modifier has a core shell morphology.
16. The composition according to any one of the preceding Embodiments wherein the impact modifier is a core shell rubber comprising a silicone based core shell rubber, an acrylic based core shell rubber or an ethylene-ethyl acrylate based rubber.
17 The composition of any one of the preceding Embodiments, wherein the cyclic (meth)acrylate esters comprise one or more cyclic or polycyclic groups.
18 The composition according to any of the preceding Embodiments wherein the cyclic or polycyclic groups of the cyclic (meth)acrylate esters are aliphatic.
19. The composition according to any of the preceding Embodiments wherein the cyclic (meth)acrylate esters comprise one or more of cyclohexyl (meth)acrylate, adamantyl (meth)acrylate, norbornyl (meth)acrylate and isobornyl (meth)acrylate.
20. The composition according to any of the preceding Embodiments wherein the one or more cyclic (meth)acrylate esters is isobornyl (meth)acrylate.
21. The composition according to any one of the preceding Embodiments wherein the one or more compounds polymerizable by free radical polymerization comprise one or more of vinylidene substituted aromatic compounds, unsaturated nitriles, conjugated dienes, alpha- or beta-unsaturated monobasic acids and derivatives thereof; vinyl halides; vinylidene chloride, vinylidene bromide, vinyl esters, and derivatives thereof, dialkyl maleates or fumarates, maleic anhydride and N-phenyl maleimide.
22. The composition according to any of the preceding Embodiments comprising:
   a) from about 25 to about 99 percent by weight of the polymerizable composition of one or more cyclic (meth)acrylate esters;
   b) from about 1 to about 65 percent by weight of the polymerizable composition of one or more alkyl (meth)acrylates; and,
   c) from 0 to about 50 percent by weight the polymerizable composition of one or more compounds polymerizable by free radical polymerization; and,
   d) from about 0 to about 10 percent by weight of one or more unsaturated compounds containing nucleophilic groups or electrophilic groups;
   wherein the weight percent is based on the weight of the composition.
23. The composition according to any one of the preceding Embodiments that forms a copolymer having a weight average molecular weight of about 50,000 g/mole or greater and a glass transition temperature of about 100 °C or greater.
24. The composition according to any one of the preceding Embodiments which forms a copolymer having a weight average molecular weight of about 120,000 g/mole or greater.
25. A copolymer prepared from the composition of any one of the preceding Embodiments.
26. The composition according to Embodiment 25 wherein the copolymer contains about 5 percent by weight or greater of bio-based content.
27. The composition according to Embodiment 25 or 26 which comprises a continuous matrix of the copolymer and a dispersed phase comprising an impact modifier.
28. The composition according to Embodiment 27 wherein the dispersed phase comprises particles of about 0.05 to about 6.0 microns.
29. The composition according to any one of Embodiments 25 to 28 wherein the copolymer contains modern carbon or 14C.
30. The composition according to any one of Embodiments 25 to 29 wherein and the copolymer has a weight average molecular weight of about 50,000 g/mole or greater and a glass transition temperature of about 100 °C or greater.
31. The composition according to any one of Embodiments 25 to 30 wherein and the copolymer has a weight average molecular weight of about 120,000 g/mole or greater.
32. The composition according to any one of Embodiments 25 to 31 wherein the polydispersity of the copolymer is about 3.0 or less.
33. The composition according to any of Embodiments 25 to 32 wherein the copolymer exhibits a glass transition temperature of about 110 °C or greater.
34. The composition according to any of Embodiments 25 to 33 wherein the copolymer exhibits a transparency of about 85 percent or greater.
35. A composition comprising a blend of one or more copolymers according to any one of Embodiments 24 to 34 and another thermoplastic polymer.
36. A composition according to Embodiment 35 wherein the thermoplastic polymer is one or more of poly(meth)acrylates, polycarbonates, polyesters, polymers containing vinylidene substituted aromatic monomers, and the like.
37. A composition according to Embodiment 35 wherein the thermoplastic polymer is one or more of polymethylmethacrylate, polystyrene, acrylonitrile-butadiene-styrene, styrene acrylonitrile, polybutyl acrylate and the like.
38. A composition according to any one of Embodiments 35 to 37 which comprises from about 50 to about 99.5 percent by weight of one or more of copolymers and from about 0.5 to about 50 percent by weight of one or more thermoplastic polymers.
39. An article comprising the composition of any one of Embodiments 25 to 38 in the form of a molded or extruded object having a glass transition temperature of about 100 °C.
40. The article according to Embodiment 39 having a glass transition temperature of about 110 ° or greater.
41. The article according to Embodiment 39 or 40, which exhibits a transparency of 85 percent or greater.
42. A method for preparing a composition comprising:
   a) contacting the components of the compositions according to any one of Embodiments 1 to 24; optionally in the presence of one or more radical polymerization initiators, optionally in the presence one or more inert solvents or diluents, under conditions such that a copolymer is formed; b) removing unreacted starting materials and solvent or diluent, if present; and
   c) removing the formed copolymer.
43. The method of Embodiment 42 wherein the components of the compostions are contacted at a temperature of about 80°C to about 200°C for about 2 to about 10 hours using a mass polymerization process.
44. The method of Embodiment 42 or 43 wherein one or more impact modifiers are dispersed or dissolved into a mixture of the one or more cyclic (meth)acrylate esters with one or more alkyl (meth)acrylates and/or one or more compounds polymerizable by free radical polymerization before introduction of the mixture into a reactor; introducing the formed mixture into a reactor to produce a continuous matrix of the copolymer and the dispersed phase comprising the impact modifier.
45. The method of any one of Embodiments 42 or 43 wherein the recovered copolymers are blended with one or more impact modifiers.
46. The method of any one of Embodiments 42 to 45 wherein the radical polymerization initiator is present in an amount of about 0.001 to about 0.1 percent by weight of the mixture.

### Illustrative Embodiments

The following examples are provided to illustrate the invention, but are not intended to limit the scope thereof. All parts and percentages are by weight unless otherwise indicated.

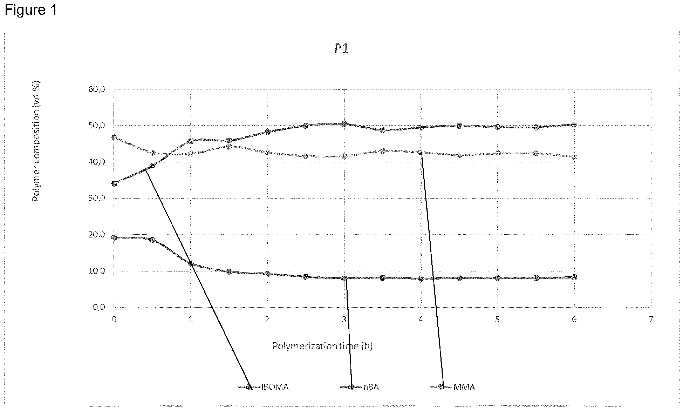

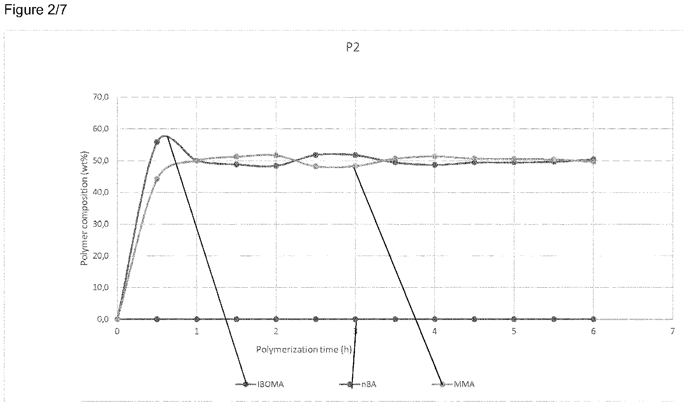

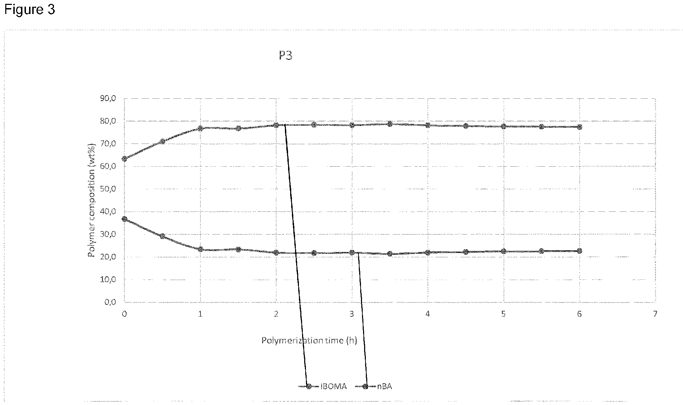

Copolymers of Isobornyl methacrylate (IBOMA), methyl methacrylate (MMA), acrylic acid (AA) and n-butyl acrylate (nBA) monomers are synthesized using Trigonox T22 1,1-Di(tert-butylperoxy) cyclohexane or Trigonox T121 tert-Amyl peroxy-2-ethyl hexanoate (Trigonox initiators from AkzoNobel) as chemical initiators. During the polymerization, intermediate samples with different conversions are taken and analyzed by GPC, GC and FTIR. The results indicate that the conversion is around 70 percent for all samples at 6 hours. For each polymerization, unreacted monomer compositions are determined by GC and copolymer compositions are calculated (Figures 1-3). Molecular weight distributions for copolymers are summarized in Table 1. Figure 1 shows the copolymer composition during polymerization for P1. Figure 2 shows the copolymer composition during polymerization for P2. Figure 3 shows the copolymer composition during polymerization for P3.

**Table 1: Feed compositions of different copolymers**

| | **IBOMA (wt%)** | **MMA (wt%)** | **nBA (wt%)** | **AA (wt%)** | **Mn (kg/mol)** | **Mw (kg/mol)** | **Mz (kg/mol)** | **PDI** |
|---|---|---|---|---|---|---|---|---|
| **P1** | 50.0 | 40.0 | 10.0 | | 193 | 431 | 714 | 2.23 |
| **P2** | 50.0 | 50.0 | - | | 120 | 318 | 562 | 2.65 |
| **P3** | 80.0 | - | 20.0 | | 86 | 235 | 433 | 2.72 |
| **P4** | 49.5 | 49.5 | 1.0 | | 129 | 331 | 547 | 2.56 |
| **P5** | 49.5 | 49.5 | - | 1.0 | 147 | 381 | 661 | 2.59 |

| | | | | | | | | |
|---|---|---|---|---|---|---|---|---|
| IBOMA: Isobornyl methacrylate, MMA: Methyl methacrylate, nBA: N-Butyl acrylate, AA: Acrylic acid. | | | | | | | | |

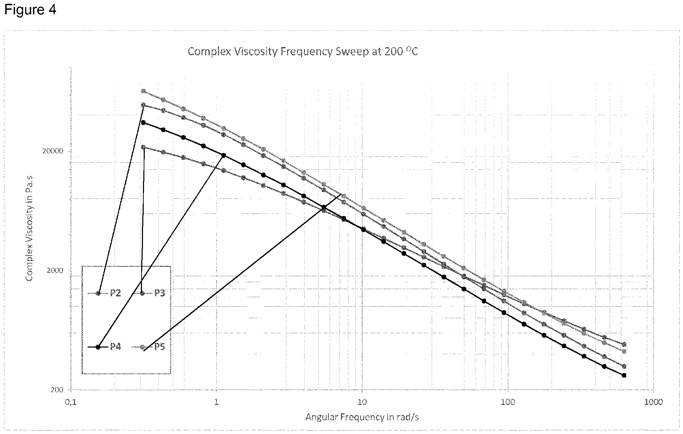

The melt viscosity of the copolymers are measured at different shear rates using a rotational rheometer. Addition of nBA decreases the melt viscosity and the 1 weight percent nBA containing copolymer (P4) shows the best processability which is determined by shear sensitivity of the melt. Figure 4 shows the melt viscosities of P2, P3, P4 and P5 as a function of shear rate.

All copolymers are transparent. Transparency of P2 was measured as 92 percent which is comparable to polystyrene (PS), 90 percent, and polymethyl methacrylate (PMMA), 93 percent.

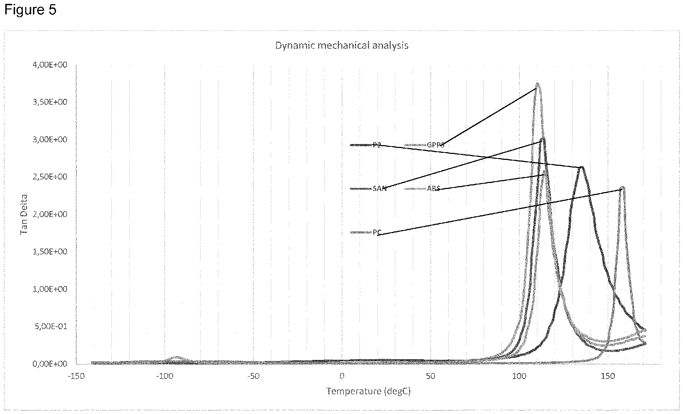

Formulation P2 is analyzed using Dynamic mechanical. The results are shown in Figure 5. Figure 5 shows dynamic mechanical analysis of P2 compared to PS, SAN, ABS and PC.

IBOMA-nBA copolymer (P3) is subjected to impact modification via compounding (Table 2). Mild compounding conditions are used to avoid thermal degradation at 250 rpm. Barrel temperatures are set at 210 °C and melt temperature measured at the die is around 220 °C. Adding 30 weight percent impact modifier improves the ductility significantly so that all the rest of the samples are pelletized and collected. The first group of impact modifiers is Metablen S-2030 and SX-005 silicone based core-shell impact modifier. Their particle size is small and multi-modal. Despite toughening and pelletizins, strands of the two formulations are brittle. The second group of impact modifiers include EXL 2390, W-600A, BioStrength 280, and Durastrengh D-480 which are butyl acrylic rubber based core-shell impact modifiers. The particle size of EXL2390 is 200-300 nm. Obtained copolymers of samples with these impact modifiers show improved toughness. EXL 2390 improves the melt stability and results in better stranding. The ethylene-ethyl acrylate copolymer, EA-101, is not compatible with P3 as polymers strands show significant delamination. TPU is also blended with P3. The strand of the blend is unstable in terms of melt-strength therefore EXL2390 is also added to that formulation. This later impact modifier stabilized the strand and the production became smoother.

**Table 2. IBOMA-nBA copolymer melt blended with core-shell impact modifiers**

| **Impact modifier** | **Units** | SX-005 (30%) | EXL 2390 (30%) | W-600A (30%) | Bio-Strength 280 (30%) | D-480 (30% ) | EA-101 (30% ) | EXL2390 (30%) + TPU (35%) |
|---|---|---|---|---|---|---|---|---|
| Charpy Impact | kJ/m² | 3.8 | 5.5 | 6.1 | 5.6 | 5.5 | 5.5 | 25 |
| Charpy Stand. Dev. | kJ/m² | 0.52 | 0.86 | 1.11 | 0.66 | 0.88 | 0.55 | 3.88 |
| Pendulum | J | 1 | 1 | 1 | 1 | 1 | 1 | 4 |
| Sample Thickness | mm | 3.92 | 3.92 | 3.92 | 3.92 | 3.92 | 3.92 | 4.03 |
| Sample width | mm | 9.84 | 9.84 | 9.84 | 9.84 | 9.85 | 9.83 | 9.92 |
| Test | °C | 23 | 23 | 23 | 23 | 23 | 23 | 23 |
| Comment | | | | unnotched | | | | |
| Flexural Strength | N/m m² | 24.8 | 34.9 | 44.12 | 35.21 | 38.14 | 30.28 | 27.37 |
| Flex. Strength St. Dev. | N/m m² | 5.89 | 5.41 | 4.79 | 2.06 | 3.29 | 3.82 | 0.26 |
| Flexural Modulus | N/m m² | 1594.6 | 1705.4 | 1687.9 | 1658.2 | 1819.7 | 1542. 6 | 859.62 |
| Flex. Modulus St. Dev. | N/m m² | 122.5 | 4 | 22.3 | 14.4 | 19 | 27.2 | 13.9 |
| Test Temperature | °C | 23 | 23 | 23 | 23 | 23 | 23 | 23 |
| Sample Thickness | mm | 3.91 | 3.91 | 3.91 | 3.91 | 3.91 | 3.91 | 3.91 |
| Support Span | mm | 64 | 64 | 64 | 64 | 64 | 64 | 64 |
| MFR | g/10 min | 13 | 2.3 | 3.1 | 9.8 | 11.3 | 12.1 | 12.1 |
| Test Temperature | °C | 230 | 230 | 230 | 230 | 230 | 230 | 230 |
| Weight | | 2.16 | 2.16 | 2.16 | 2.16 | 2.16 | 2.16 | 2.16 |
| Yield Stress | N/m m² | . | . | . | . | . | . | 15.77 |
| Ty St. Dev. | N/m m² | . | . | . | . | . | . | . |
| Rupture Stress | N/m m² | 7.1 | 13.63 | 17.8 | 13.37 | 16.66 | 11.65 | 13.57 |
| Tr St. Dev. | N/m m² | . | 2.16 | 3.13 | 5.05 | . | 3.65 | 0.39 |
| Elongation at Yield | % | . | . | . | . | . | . | 8.13 |
| Elongation at Rupture | % | 0.5 | 1.7 | 1.1 | 1.7 | 1.6 | 1.6 | 10.15 |
| Er St. Dev. | % | . | . | 0.2 | . | | . | . |
| Tensile Modulus | N/m m² | 1599 | 1682.8 | 1634.9 | 1650.4 | 1767. 6 | 1576 | 822.3 |
| Modulus St. Dev. | N/m m² | . | 30.6 | 12.6 | 21.8 | . | 37.2 | 5.8 |
| Test Temperature | °C | 23 | 23 | 23 | 23 | 23 | 23 | 23 |
| Test Speed | mm/min | 5 | 5 | 5 | 5 | 5 | 5 | 5 |
| Test Speed Modulus | mm/min | 1 | 1 | 1 | 1 | 1 | 1 | 1 |

| | | | | | | | | |
|---|---|---|---|---|---|---|---|---|
| Charpy Impact is determined according to method ISO 179 Flexural properties are determined according to method ISO 178 Melt flow rate (MFR) is determined according to method ASTM D1238 (200C/5kg) The tensile properties are determined according to method ISO 527 IBOMA-MMA copolymer (P2) is melt blended with a core-shell type acrylic impact modifier and poly methyl methacrylate (PMMA). Addition of PMMA into IBOMA - MMA copolymer results in slightly decreased impact resistance, however when combined with the impact modifier impact resistance of the blend is improved compared to neat polymers. These blends are transparent. | | | | | | | | |

**Table 3. IBOMA-MMA copolymer (P2) is melt blended with a core-shell type acrylic impact modifier (M201, Kaneka) and PMMA polymethyl methacylate.**

| | | | | | | |
|---|---|---|---|---|---|---|
| PMMA | wt% | 20 | 30 | 20 | | 100 |
| IBOMA-MMA | wt% | 50 | 70 | 80 | 100 | |
| M201 | wt% | 30 | | | | |
| Charpy Unnotched | kJ/m² | 25.9 | 8.2 | 6.9 | 9.1 | 20.5 |
| Charpy Notched | kJ/m² | 2.6 | | | | |
| Flexural Strength | N/mm² | 63.3 | 103.5 | . | 108.7 | 112.3 |
| Flexural Modulus | N/mm² | 1956.9 | 3034..8 | . | 3093.1 | 3389.5 |
| MFR (230°C) | g/10min | 13 | 2.3 | 3.1 | 9.8 | 11.3 |
| Yield Stress | N/mm² | 39.3 | | . | | |
| Rupture Stress | N/mm² | 34 | 47.5 | 51.2 | 55.1 | 71 |
| Elongation at Yield | % | 4.2 | . | . | . | . |
| Elongation at Rupture | % | 17.8 | 2.6 | 5.2 | 2.8 | . |
| Tensile Modulus | N/mm² | 1883 | 3142 | 3202 | 3207 | 3241 |

IBOMA-MMA (P2) and IBOMA-MMA-nBA (P4) are also blended with different core-shell type acrylic impact modifiers, to increase the notched impact resistance of the polymers. EXL-2300 at 40 wt% addition level results in highest notched impact resistance while the produced polymer was opaque.

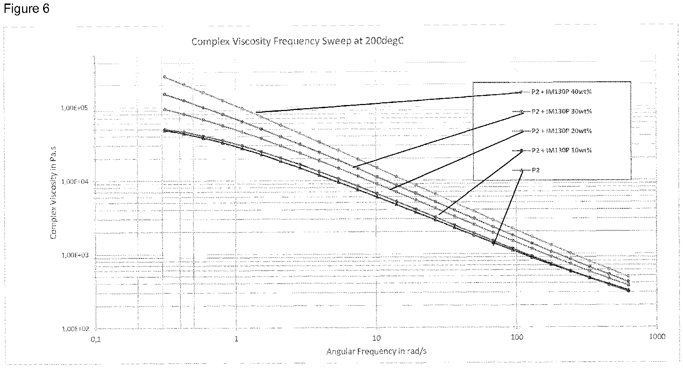

Figure 6 shows the Melt rheology of P2 with acrylic core shell type impact modifier IM130P at different impact modifier levels. Addition of impact modifier increased the melt viscosity.

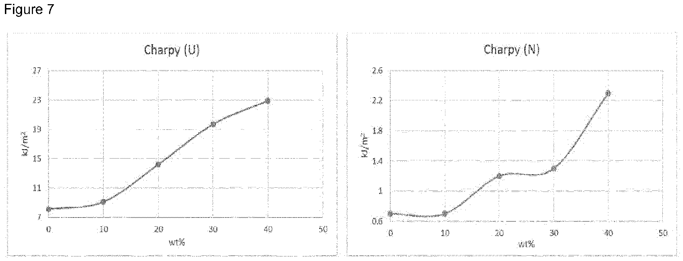

Figure 7 shows the Charpy impact resistance results for P2 at different impact modifier levels (IM130P). left: unnotched Charpy impact test, right: notched Charpy impact test. Impact resistance increases with increasing fraction of impact modifier.

**Table 4. IBOMA-MMA copolymer (P2) and IBOMA-MMA-nBA copolymer (P4) were melt blended with different core-shell type acrylic impact modifiers.**

| | | | | **P2** | | | **P4** |
|---|---|---|---|---|---|---|---|
| | | EXL2300 30wt% | EXL2300 40wt% | IM130P 30wt% | IM130P 40wt% | EXL2390 30wt% | IM130P 30wt% |
| Charpy Impact (n) Charpy Stand. | kJ/m² | 1.7 | 4.9 | 1.3 | 2.3 | 2.8 | 1.2 |
| Dev. | kJ/m² | 0.3 | 0.4 | 0.1 | 0.4 | 0.2 | 0.4 |
| | | | | | | | |
| Charpy Impact (un) | kJ/m² | 17.4 | 21.1 | 19.7 | 22.9 | 19.9 | 20.4 |
| Charpy Stand. Dev. | kJ/m² | 2.7 | 2.5 | 2 | 1.2 | 2.9 | 3.4 |
| | | | | | | | |
| Yield Stress | N/mm² | 39.19 | 34.43 | 43.80 | 37.38 | 40.61 | 46.75 |
| Ty St. Dev. | N/mm² | 0.14 | 0.25 | 0.14 | 0.21 | 0.39 | 0.39 |
| Rupture Stress | N/mm² | 34.18 | 28.36 | 38.46 | 32.23 | 36.65 | 42.33 |
| Tr St. Dev. | N/mm² | 0.52 | 0.31 | 0.77 | 0.40 | 0.86 | 0.68 |
| Elongation at Yield | % | 3.01 | 2.83 | 2.95 | 3.17 | 2.98 | 3.43 |
| Ey St. Dev. | % | 0.21 | 0.02 | 0.02 | 0.02 | 0.02 | 0.03 |
| Elongation at Rupture | % | 6.45 | 6.98 | 6.15 | 6.00 | 5.09 | 6.16 |
| Er St. Dev. | % | 0.50 | 0.90 | 0.51 | 0.22 | 0.53 | 0.59 |
| Tensile Modulus | N/mm² | 2045.03 | 1666.55 | 2060.88 | 1666.93 | 1919.19 | 2059.13 |
| Modulus St. Dev. | N/mm² | 25.88 | 7.19 | 16.36 | 23.98 | 14.34 | 4.87 |

| | | | | | | | |
|---|---|---|---|---|---|---|---|
| P2: IBOMA-MMA P4: IBOMA-MMA-nBA | | | | | | | |

Figure 7 shows the Charpy impact resistance results for P2 at different impact modifier levels (IM130P). left: unnotched Charpy impact test, right: notched Charpy impact test. Impact resistance increases with increasing fraction of impact modifier

## Claims

1. A composition comprising a) from about 20 to about 99 percent by weight of one or more cyclic (meth)acrylate esters; b) from about 1 to 80 percent by weight of one or more alkyl (meth)acrylates; and c) one or more of features i to iv;
i) the one or more alkyl (meth)acrylates have two or more carbons in the alkyl group;
ii) the one or more alkyl (meth)acrylates contain one or more alkyl methacrylates and one or more C₂₋₈ alkyl acrylates;
iii) one or more unsaturated compounds containing nucleophilic groups or electrophilic groups;
iv) one or more ingredients selected from impact modifiers, colorants, mold release agents, flow modifiers, UV absorbers, light stabilizers, fillers, fibers, anti-oxidants, and heat stabilizers;
wherein the composition forms copolymers and the percent by weight is based on the weight of the composition.

2. The composition according to Claim 1 containing d) from about 1 to about 70 percent by weight of one or more compounds polymerizable by free radical polymerization.

3. The composition according to Claim 1 or 2 wherein the one or more alkyl (meth)acrylates have two or more carbons in the alkyl group.

4. The composition according to Claim 1 or 2 wherein the one or more alkyl (meth)acrylates contain one or more alkyl methacrylates and one or more C₂₋₈ alkyl acrylates.

5. The composition according to Claim 1 or 2 containing one or more unsaturated compounds containing nucleophilic groups or electrophilic groups.

6. The composition according to Claim 5 containing from about 0.01 to about 10 percent by weight of one or more unsaturated compounds containing nucleophilic groups or electrophilic groups based on the weight of the composition.

7. The composition according to any one of the preceding claims containing one or more ingredients selected from impact modifiers, colorants, mold release agents, flow modifiers, UV absorbers, light stabilizers, fillers, fibers, anti-oxidants and heat stabilizers.

8. The composition according to any one of the preceding claims comprising from about 20 to about 95 percent by weight of one or more cyclic (meth)acrylate esters, one or more alkyl (meth)acrylates, optionally, one or more compounds polymerizable by free radical polymerization and/or one or more unsaturated compounds containing nucleophilic groups or electrophilic groups based on the weight of the composition; and from about 0.5 to about 50 percent by weight of the impact modifier based on the weight of the composition.

9. The composition according to any of the preceding claims wherein the cyclic (meth)acrylate esters comprise one or more of cyclohexyl (meth)acrylate, adamantyl (meth)acrylate, norbornyl (meth)acrylate and isobornyl (meth)acrylate.

10. A copolymer prepared from the composition of any one of the preceding claims.

11. The composition according Claim 10 wherein and the copolymer has a weight average molecular weight of about 50,000 g/mole or greater, a glass transition temperature of about 100 °C or greater and a polydispersity of about 3.0 or less.

12. A composition comprising a blend of one or more copolymers according to Claims 10 or 11 and another thermoplastic polymer.

13. A composition according to Claim 12 wherein the thermoplastic polymer is one or more of poly(meth)acrylates, polycarbonates, polyesters, and polymers containing vinylidene substituted aromatic monomers.

14. An article comprising the composition of any one of Claims 10 to 13 in the form of a molded or extruded object having a glass transition temperature of about 100 °C.

15. A method for preparing a composition comprising:
a) contacting the components of the compositions according to any one of Claims 1 to 9; optionally in the presence of one or more radical polymerization initiators, optionally in the presence one or more inert solvents or diluents, under conditions such that a copolymer is formed;
b) removing unreacted starting materials and solvent or diluent, if present; and
c) removing the formed copolymer.
